# EUROPÄISCHE PATENTANMELDUNG

(11) **EP 1 111 749 A2**
(43) Veröffentlichungstag der Anmeldung: **27.06.2001**
(21) Anmeldenummer: 00128093.2
(22) Anmeldetag: 21.12.2000
(51) Int. Cl.: H02G 3/18

(54) **Modulare Rechnervorrichtung zur Installation in einer Unterputzdose**

(30) Priorität: 23.12.1999 DE 19962493
(71) Anmelder: secuPorta Gesellschaft für Sicherheitstechnik mbH, 16225 Eberswalde (DE)
(72) Erfinder: Bäuerle, A., c/o secuPorta GmbH, 16225 Eberswalde (DE)
(74) Vertreter: Kewitz, Ansgar

(57) **Zusammenfassung**

Modularer Rechner, mit Modulen, die aufgrund ihrer Abmessung und/oder Beschaffenheit zur Installation in einer Unterputzdose geeignet sind, mit einem Prozessor-Level-Modul, dass auf einer Platine einen Prozessor aufweist, mit einem Front-Level-Modul, dass durch ein vorzugsweise entkoppelbares Bussystem mit dem Prozessor-Level-Modul verbunden ist, wobei das Front-Level-Modul auf einer vorzugsweise austauschbaren Platine einen Schnittstellkoppler und/oder einen optischen Sender und/oder einen optische Empfänger und/oder einen elektromagnetischen Sender und/oder einen elektromagnetischen Empfänger und/oder einen Sensor und/oder eine Anzeigeeinheit und/oder eine Eingabeeinheit und/oder ein Relais und/oder einen Chipkarten-Leser und/oder eine Kamera aufweist.

## Beschreibung

Die Erfindung betrifft einen modularen Rechner, mit Modulen, die aufgrund ihrer Abmessung und/oder Beschaffenheit zur Installation in einer Unterputzdose geeignet sind.

Der Bedarf an intelligenter Technik im Hause steigt stetig. Systeme wie die Zutrittskontrolle steuern oder Systeme die Hinweise geben sind ein wichtiger Bestandteil von vielen neuen Gebäuden. Ferner wird der Bedarf an Kommunikationselektronik insbesondere in Bürokomplexen immer höher. Die Betreiber solcher Gebäude verlangen, dass Zugriff auf Informationen überall und in jeglicher Form möglich sind. Damit diese Elektronik kostengünstig verbaut werden kann, sind modulare Konzepte notwendig und der Rückgriff auf Komponenten die im Gebäudebau verwendet werden.

Aufgabe der vorliegenden Erfindung ist es, ein modulares System bereitzustellen, das kostengünstig in bestehende und neue Gebäude integriert werden kann, ohne dabei Abstriche an die Technik und das Design machen zu müssen.

Gelöst wird diese Aufgabe durch die Merkmalen des Anspruchs 1, insbesondere durch einen modularen Rechner, mit Modulen, die aufgrund ihrer Abmessung und/oder Beschaffenheit zur Installation in einer Unterputzdose geeignet sind. Der modulare Rechner besteht hierbei aus einem Prozessor-Level-Modul, dass auf einer Platine mindestens einen Prozessor aufweist. Dem Prozessor kommt die Aufgabe zuteil, die notwendigen Rechenoperationen durchzuführen, insbesondere die Operationen zum Abarbeiten der Software, und zur Kommunikation mit den weiteren Modulen.

Weiterhin weist der modulare Rechner ein Front-Level-Modul auf, dass durch ein vorzugsweise entkoppelbares Bussystem mit dem Prozessor-Level-Modul verbunden ist, wobei das Front-Level-Modul auf einer vorzugsweise austauschbaren Platine einen Schnittstellkoppler, einen optische Sender oder Empfänger, einen elektromagnetische Sender oder Empfänger, einen Sensor, eine Anzeigeeinheit, eine Eingabeeinheit, ein Relais, einen Chipkarten-Leser und/oder eine Kamera aufweist. Das Front-Level-Modul hat die Aufgabe durch einfaches Verbinden mit dem Prozessor und Anpassung der Software, die auf dem Prozessor abläuft, eine möglichst große Flexibilität zu bieten und somit einen sehr großen Anweisungsbereich abzudecken.

Die Kommunikation der einzelnen Module mit der Außenwelt erfolgt durch ein Kommunikations-Level-Modul mit Schnittstellen zur Datenkommunikation, wobei dieses Modul, das vorzugsweise durch ein entkoppelbares Bussystem mit den weiteren Modulen verbunden ist, über serielle, parallele, ISDN-, USB-, Funk-und/oder Ethernet Schnittstellen verfügt. In das Kommunikations-Level-Modul setzt die notwendigen Protokolle, wie TCP-IP oder IPX entsprechend um.

Die Module sind in Sandwich-Bauweise übereinander angeordnet, wobei das Bussystem durch Steckverbindungen die einzelnen Level miteinander verbindet.

Zum Einbau in eine runde Unterputzdose sind die Platinen vorzugsweise rund ausgebildet sind. In einer weiteren Ausführungsform sind die Leiterplatten flexibel ausgelegt, wodurch sie in die Unterputzdose gefaltet werden können.

Ein Bottom-Level-Modul dient zum Programmieren des Rechners und versorgt das System vorzugsweise über das Bussystem mit Strom.

Die Software, die über die Schnittstellen auf das System übertragen wurde, wird vorzugsweise in einen nicht flüchtigen Speicher geladen. Dieser nicht flüchtige Speicher kann je nach Bedarf auf den unterschiedlichen Modulen angeordnet sein. So ist es denkbar, dass bei rechenintensiven Anwendungen, mehrere Prozessoren zum Einsatz kommen, die jeweils durch entsprechende Software gesteuert werden.

sowie dem unten aufgeführten Beispiel zuerkennen, sind für die Art der Sensoren keine Grenzen gesetzt. Ein Fingerabdruck-Sensor wird als Beispiel der vorliegenden Erfindung aufgeführt. Dieser Sensor kann sowohl optoelektronischer, als auch Kapazität, als auch thermischer Natur sein. Als Schnittstellen sind Standardschnittstellen wie Bluetooth-, Infrarot-, USB-, serielle (RS 485, RS232) oder parallele Schnittstellen vorstellbar.

Um unterschiedlichen Ansprüchen an die Rechnerleistung entsprechenden zu können, können die Prozessor-Level-Module je nach Bedarf mit unterschiedlichen Prozessoren ausgestattet werden. Prozessoren wie der Hitachi H8S der Hyperstone E1-16XT, StrongARM bzw. ARM sind denkbar. Als Betriebssystem wird vorzugsweise ein Linux System oder ein Windows System verwendet.

Die einzelnen Module wie Prozessor-Level-Module, Front-Level-Module und/oder Kommunikationsmodule sind durch das Bussystem miteinander verbunden.

Zur Administration des Systeme, ist ein Webserver vorgesehen. Der Web-Servers erlaubt es, durch einen Bekannten Browser die notwendigen Einstellungen am System vorzunehmen. Hierfür ist es natürlich notwendig, dass das System eine Kommunikation über die TCP-IP erlaubt.

Weiter vorteilhafte Ausführungsformen sind in den Unteransprüchen aufgeführt. Es folgt eine detaillierte Beschreibung anhand der Zeichnungen. Es zeigt:
- **Figur 1**: die Seitenansicht eines Finger Abdrucksensors, der in einer Unterputzdose eingebaut ist, wobei mehrere Platinen übereinander gestapelt sind;
- **Figur 2**: die Draufsicht auf die Vorrichtung nach Figur 1;

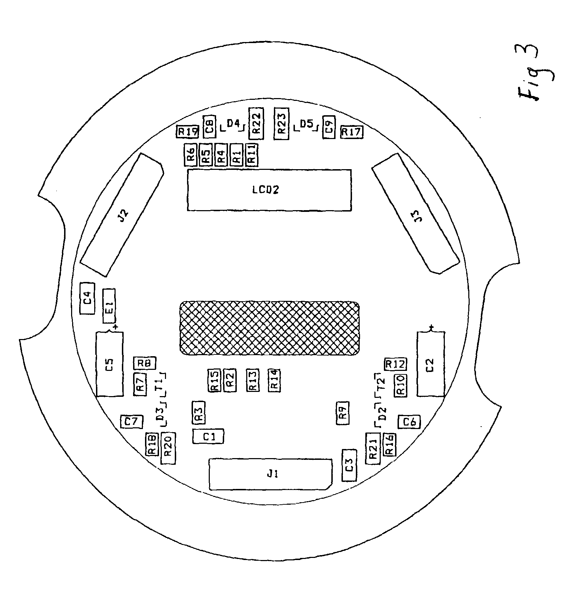

- **Figur 3**: die Draufsicht auf einer Platine wie sie in Figur 1 zu sehen ist;

Die vorliegende Ausführungsform betrifft eine Anordnung zur Identifikation von Personen in Zutritts- und Zugriffskontrollanlagen mit einer Fingerprinterkennung in einem Gehäuse mit Fingerauflage-fläche.

Es sind Anordnungen zur Identifikation von Personen bekannt, die mittels Fingerprinterkennung den Zugang zu Räumen steuern. Der Finger/Daumen wird auf eine Auflagefläche gelegt, durch LED's beleuchtet und über eine CCD-Kamera abgetastet. Das erzeugte Abbild des Fingerabdruckes wird digitalisiert, nach bestimmten Merkmalen ausgewertet und mit abgespeicherten Daten verglichen. Bei Übereinstimmung wird der Zugang freigegeben.

Nachteilig bei den bekannten Anordnungen ist, dass diese auch bei einer geringen Anzahl von Zugangsberechtigten einen separaten Computer benötigen. Die Elektronik zur Türsteuerung ist auch häufig extern angeordnet. Bei Ausfall des Sensors kann die Tür durch einen Zugangsberechtigten nicht mehr geöffnet werden.

Im vorliegenden Fall ist die Zugriffskontrollanlagen mit einer Fingerprinterkennung so ausgebildet, dass das Gehäuse einen in einen Hohlraum in der Wand oder im Türrahmen eingelassenen und damit fest verbundenen Teil mit einer Prozessor- sowie einer Versorgungs-leiterplatte und einen in den ungeschützten Außenraum ragenden Bedienteil (Front-Level-Modul) mit Fingerauflagefläche, Fingerprintsensor und einer Transponderantenne enthält. In einem nur vom Innenraum, also von der sicheren Seite, zugänglichen Gehäuse ist die manipulationssichere Elektronik angeordnet. Diese besteht aus einer Auswerteeinheit (Prozessor-Level-Module) mit Entschlüsselungslogik für den Fingerprint, einer Auswerteeinheit für einen Transponder, einer Steuereinheit für eine Tür oder Schranke und einer Anbindung an verschiedene Datenwege.

Die Anordnung in eine Unterputzdose eingebaut und kann aus Einzelleiterplatten oder einer flexiblen, in den Hohlraum gefalteten Leiterplatte bestehen.

Es ist zweckmäßig, dass der Fingerprintsensor ein temperaturempfindlicher Liniensensor ist. Anderer Arten von Sensoren sind jedoch denkbar.

In Ausgestaltung der Erfindung ist die Fingerauflagefläche länglich, vorzugsweise in elliptischer Form ausgearbeitet.

Erfindungsgemäß sind zur Anzeige der Bewegungsrichtung des Fingers in der Fingerauflagefläche mehrere LED's als Lauflicht übereinander angeordnet.

In weiterer Ausgestaltung kann wahlweise eine Anbindung an einen RS 485- oder LAN-Bus sowie an ISDN und/oder einen Chipkartenleser erfolgen. Hierdurch ist es möglich die Fingerprint-Informationen auch zentral auf einem Rechner abzulegen.

In die erfindungsgemäße Anordnung kann ein Signalgeber integriert sein.

In einen Durchbruch in der Türzarge 3 wird von der Außenseite der Tür und damit der möglichen Angriffsseite eine Unterputzdose 2 eingesetzt und befestigt, in die die wesentlichen Teile der Fingerprinterkennung eingebaut werden.

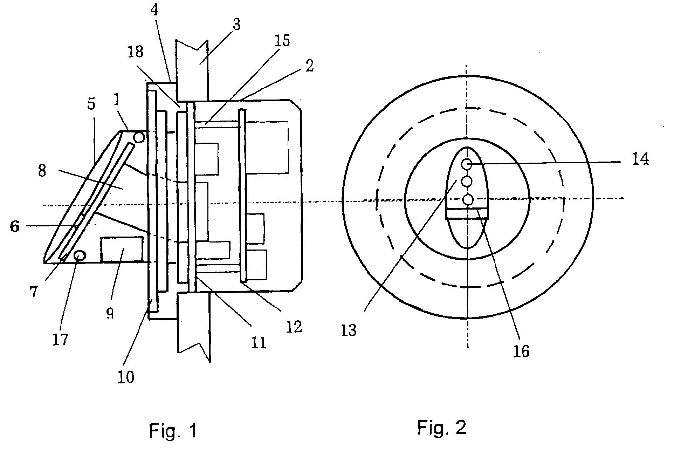

Die Fingerprintgehäusekappe 1 weist eine geneigte Stirnfläche 5 auf, in der sich gemäß Fig. 2die Fingerauflagefläche 13 mit drei LED's 14 und einem Sensorfenster 16 befinden. Die Fingerauflagefläche 13 ist ergonomisch so geformt, dass der über das Sensorfenster 16 gleitende Finger/Daumen eine gute Führung erhält. Die Fingerauflagefläche 13 weist eine ellyptische Ausformung auf. Die notwendige Bewegungsrichtung wird durch die drei übereinander angeordneten, als Lauflicht geschalteten LED's angezeigt.

In der Fingerprintgehäusekappe 1 befindet sich gemäß Fig. 1 hinter der geneigten Stirnfläche 5 eine Sensorleiterplatte 7 mit einem thermischen Sensor 6, der unter dem Sensorfenster 16 liegt und mit dessen Oberfläche abschließt. Hinter der Sensorleiterplatte 7 befindet sich eine ringförmige Transponderantenne 17. In der Fingerprintgehäusekappe 1 finden noch ein Signalgeber 9 und ein mehradriges Verbindungskabel 8 von der Sensorleiterplatte 7 zu einer Prozessorleiterplatte (Prozessor-Level-Modul) 11 Platz.

Ein Außenring 4 ist so gestaltet, dass er einen umlaufenden Steg 18 aufweist, der in die Unterputzdose 2 hineinragt und den Anschlag für die Prozessorleiterplatte 11 bildet. Auf Abstandshaltern 15 befindet sich eine Versorgungsleiterplatte 12 über der Prozessorleiterplatte 11. Zur Erhöhung der Sicherheit sendet die Prozessorleiterplatte 11 nur verschlüsselte Signale an eine abgesetzte Entschlüsselungs- und Auswerteeinheit. Die Versorgungsleiterplatte 12 enthält u.a. eine Stromversorgung und ein Ausgangsrelais.

Der Außenring 4 dient als Baugruppenträger. Auf diesem ist die Fingerprintgehäusekappe 1 mit der erläuterten Elektronik befestigt. Beim Einbau wird die Fingerprintbaugruppe in die Unterputzdose 2 eingeführt, bis der Außenring 4 auf dem Rand aufsitzt. Danach erfolgt die

Fixierung und eine Abdeckung erfolgt mit einem Blendring 10.

Zur Erreichung einer optimalen Sicherheit sind die sicherheitsrelevanten Baugruppen in der Nähe der Tür in einem gesicherten Gehäuse angeordnet, das nur vom Innenraum, d.h. von der sicheren Seite, zugänglich ist. In diesem Gehäuse befinden sich eine Auswerteeinheit mit Entschlüsselungslogik für den Fingerprint, eine Auswerteeinheit für einen Transponder, eine Steuereinheit für eine Tür oder Schranke und eine Anbindung an verschiedene Datenwege. Die Steuereinheit kann auch ein Öffnerrelais auf den Auswerteeinheiten sein.

Bei der Erfindung erfolgt eine konsequente Trennung in Baugruppen, die von der möglichen Angriffsseite und solche, die nur von der sicheren Seite angeordnet werden müssen. Von der für alle Personen zugänglichen Bedienseite sind alle notwendigen Funktionen in einem kleinen, leicht einzubauenden Gehäuse untergebracht. Durch die Kombination von Fingerprint und Transponder sind verschiedene Funktionen möglich. Eine Zutrittsberechtigung kann erteilt werden, wenn Fingerprint und Transponder oder Fingerprint oder Transponder einen Berechtigten identifiziert haben. So kann auch bei Ausfall des Fingerprint durch den Transponder eine Mindestfunktionssicherheit erhalten bleiben. Es besteht auch bei sehr hohen Anforderungen an die Sicherheit der Identifikation die Möglichkeit, Aufwand und Reaktionszeit zu reduzieren, indem zuerst die sehr schnelle Identifikation mit dem Transponder durchgeführt wird. Bei Übereinstimmung wird nur noch der mit dem Code hinterlegte Datensatz für den Fingerprint mit dem zu identifizierenden verglichen.

Die erfindungsgemäße Anordnung kann zur Identifikation von Personen in Zutritts- und Zugriffskontrollanlagen mit unterschiedlichen Sicherheitsforderungen eingesetzt werden. Besonders geeignet ist diese Anordnung in Verbindung mit einer Sicherheitstür als Zutrittskontrolle für sicherheitsrelevante Räume. Durch den kompakten Aufbau eignet sich die Anordnung auch für eine Nachrüstung bei älteren Anlagen.

### Bezugszeichen

- 1: Fingerprintgehäusekappe
- 2: Unterputzdose
- 3: Zarge/Wanddurchbruch
- 4: Außenring
- 5: geneigte Stirnfläche von 1
- 6: thermischer Sensor
- 7: Sensorleiterplatte
- 8: Verbindungskabel
- 9: Signalgeber
- 10: Blendring
- 11: Prozessorleiterplatte
- 12: Versorgungsleiterplatte
- 13: Fingerauflagefläche
- 14: LED-Kette
- 15: Abstandshalter
- 16: Sensorfenster
- 17: Transponderantenne
- 18: umlaufender Steg von 4

## Patentansprüche

1. Modularer Rechner, mit Modulen, die aufgrund ihrer Abmessung und/oder Beschaffenheit zur Installation in einer Unterputzdose geeignet sind,
- mit einem Prozessor-Level-Modul, dass auf einer Platine einen Prozessor aufweist,
- mit einem Front-Level-Modul, dass durch ein vorzugsweise entkoppelbares Bussystem mit dem Prozessor-Level-Modul verbunden ist, wobei das Front-Level-Modul auf einer vorzugsweise austauschbaren Platine einen Schnittstellkoppler und/oder einen optischen Sender und/oder einen optische Empfänger und/oder einen elektromagnetischen Sender und/oder einen elektromagnetischen Empfänger und/oder einen Sensor und/oder eine Anzeigeeinheit und/oder eine Eingabeeinheit und/oder ein Relais und/oder einen Chipkarten-Leser und/oder eine Kamera aufweist.

2. Modularer Rechner nach Anspruch 1, dadurch gekennzeichnet, dass auf einem weiteren Kommunikations-Level-Modul, das vorzugsweise durch ein entkoppelbares Bussystem mit den weiteren Modulen verbunden ist, Schnittstellen zur Datenkommunikation angeordnet sind.

3. Modularer Rechner nach Anspruch 3, dadurch gekennzeichnet, dass serielle, parallele, ISDN-, USB-, Funk- und/oder Ethernet Schnittstellen vorhanden sind.

4. Modularer Rechner nach einem oder mehreren der Ansprüche 1 bis 3, dadurch gekennzeichnet, dass die Module in Sandwich-Bauweise übereinander angeordnet sind und durch Steckverbindungen das Bussystem der einzelnen Level miteinander verbunden ist.

5. Modularer Rechner nach einem oder mehreren der Ansprüche 1 bis 4, dadurch gekennzeichnet, dass die Platinen rund ausgebildet sind, um somit den Einbau in eine bekannte Unterputzdose zu ermöglichen und/oder dass die Leiterplatten flexibel ausgelegt sind und somit in die Unterputzdose gefaltet sind.

6. Modularer Rechner nach einem oder mehreren der Ansprüche 1 bis 5, gekennzeichnet durch ein Bottom-Level-Modul dass eine Programmierschnittstelle aufweist und vorzugsweise über das Bussystem zur Stromversorgung dient.

7. Modularer Rechner nach einem oder mehreren der Ansprüche 1 bis 6, dadurch gekennzeichnet, dass die Software den Prozessor und/oder auch die Elemente des Front-Level-Moduls steuert.

8. Modularer Rechner nach einem oder mehreren der Ansprüche 1 bis 7, dadurch gekennzeichnet, dass die Sensoren Finger-, optoelektronische und/oder thermische Sensoren sind und die Schnittstellen Standard Bluetooth-, Infrarot-, USB-, serielle oder parallele Schnittstellen sind.

9. Modularer Rechner nach einem oder mehreren der Ansprüche 1 bis 8, dadurch gekennzeichnet, dass das Prozessor-Level-Modul je nach Bedarf mit unterschiedlich starken und schnellen Prozessoren ausgebildet ist.

10. Modularer Rechner nach einem oder mehreren der Ansprüche 1 bis 9, dadurch gekennzeichnet, dass Prozessor-Level-Module, Front-Level-Module und/oder Kommunikationsmodule durch das Bussystem miteinander verbunden werden können.
